# EUROPEAN PATENT APPLICATION

(11) **EP 2 857 375 A1**
(43) Date of publication of application: **08.04.2015**
(21) Application number: 14187418.0
(22) Date of filing: 02.10.2014
(51) Int. Cl.: C04B 35/573, C01B 31/36, C04B 35/626

(54) **Spherical crystalline silicon carbide powder and a method for manufacturing same**

(30) Priority: 07.10.2013 JP 2013209896
(71) Applicant: Shinano Electric Refining Co., Ltd., Tokyo 101-0044 (JP)
(72) Inventor: Mochizuki, Masahiro, Chiyoda-ku, Tokyo 101-0044 (JP); Shimizu, Takaaki, Chiyoda-ku,, Tokyo 101-0044 (JP)
(74) Representative: TBK

(57) **Abstract**

A spherical crystalline silicon carbide powder as well as its manufacturing method are proposed; the new powder mean grain size is 0.5 - 5 micrometers, its specific volume of interior pores having a mean diameter of 0.003 through 0.1 micrometer is 0.000007 cm³/g through 0.01 cm³/g, and its specific surface area is 0.5 m²/g through 8.0 m²/g.

## Description

### [Priority Claimed]

The present non-provisional application claims priority, as per Paris Convention, from Japanese Patent Application No. 2013-209896 filed on 2013-10-7th, the disclosure of which is hereby incorporated by reference herein in its entirety.

The present invention relates to a spherical crystalline silicon carbide powder having a small grain diameter and a condensed inner portion (interior), and a method for manufacturing the same

### [Background of the Invention]

Since, the silicon carbide powder has a high thermal conduction property and high temperature resistance as well as high hardness, it is utilized to make a molded grindstone, organic polymer-based high thermal conductive composite, and molded devices used for a semiconductor manufacturing apparatus. In these uses, the silicon carbide powder is mixed with a matrix such as poval, phenol resin and epoxy resin and with any of various molding assistants like a binder such as methyl cellulose, and then the resulting mixture is polymerized. The obtained polymerized product is either pressurized or heated to form viscous varnish, film or a sintered structure body etc. Also, silicon carbide powder is useful as loose grinding powder for use with a wire saw to cut various kinds of ingots made of such materials as silicon and quartz, or for wafer lapping.

The shape of the powder grain is generally the as-pulverized shape, which is the shape just after the pulverization process, and as such is an amorphous body having sharp edges. This powder grain shape is favorable for the purpose of obtaining the composite made of the silicon carbide powder and various polymers, since the higher addition ratio of silicon carbide powder results in higher performance with respect to the properties of hardness, thermal conduction and thermal resistance; however, the effort to increase the density is thwarted by the fact that the shape of the silicon carbide powder is amorphous with sharp edges.

Also, in the cases of a plastic molding process and a slip casting process, which are upstream steps for obtaining a sintered structure body, there is a limit in obtaining a precursor filled with silicon carbide powder at a high density so that it has been difficult to increase the density of the sintered body to its true density.

Now, as examples of oxide ceramics besides silicon carbide, such as alumina, silica, zirconia, titania, and magnesia, spherical grains are known, as shown in "ADMAFINE" (a brochure of Admatechs Company Limited). As is described in IP Document 1, such oxide ceramics can be obtained through a manufacturing method wherein respective metallic powder is introduced into fire whereby the combustion oxidation and the melt-spheroidizing are effected simultaneously. Also, a method for manufacturing spherical grains of silicon carbide, which is similar to the method described above, is proposed in IP Publication 2; however, there is no description with regard to the purity of the silicon carbide grain thus obtained.

Incidentally, the melting point of silicon carbide is high (2500 °C or higher), and its oxidation reaction starts at a temperature in the vicinity of 1000 °C under an oxidizing atmosphere; therefore it undergoes oxidation combustion in the fire, and a considerable part of it turns silicon oxide. In fact, according to JIS R6124 (Method for chemical analysis of silicon carbide abrasives), all carbons (both carbon of silicon carbide molecule and free carbon) are subjected to oxidation combustion at a temperature between 1,300 °C and 1,350 °C in the presence of a combustion improver, and from the amount of the CO₂ created by this combustion is subtracted an amount of CO₂ which is created when only the free carbon is subjected to oxidation combustion at 850 °C for 5 minutes, and from the result of this subtraction the content of silicon carbide is calculated. Therefore, this analytical method provides a basis for the fact that silicon carbide cannot be prevented from undergoing oxidation at a temperature of 850 °C or higher.

Hence, conventionally, a method has been practice in which silicon carbide grain is produced while the oxidation combustion of silicon carbide is suppressed. For example, in Non-IP Publication 1, it is described that a spherical grain of silicon carbide is produced by spray drying a slurry made of a mixture of water glass and sugary sucrose to thereby obtain a spherical precursor having a diameter (an average grain size) of 10 - 20 *µ* m, and then sintering it at a temperature from 1,300 °C to 1,600 °C. However, in this method, it is difficult to preserve the *β* crystal and maintain the initial grain size, and furthermore only the spherical grain having a minute diameter of 10 - 20 *µ* m can be obtained. Also, the spherical grains that are obtained are only aggregates consisting of grains that are fused together.

In IP-Publication 3, there is described a method wherein infinitesimal grains of silicon carbide having an average diameter of about 1 *µ* m is mixed with an organic polymer as a binder, which is converted to a carbon source by calcination at 1400 - 1900 °C, to produce grains, and thereafter molten metallic silicon is impregnated into the interior pores, which have failed to be consolidated, utilizing the capillary phenomenon, in order to make the silicon react with carbon residue to thereby obtain condensed spherical silicon carbide grains is proposed. However, thus obtained grains have an average diameter of 1 mm or greater, and they are too large.

Further, IP Publication 4 describes a method for obtaining condensed spherical silicon carbide grains, wherein a slurry containing silicon carbide fine powder having an average grain diameter of 0.05 - 1 *µ* m is spray-dried to form a grain, and thereafter the grain is sintered at a temperature of 1,900 °C - 2,300 °C. However, this method has a disadvantage in that the thus-obtained powder has an average grain size of 5 - 2000 *µ* m, which is far greater than the size the present inventors are aiming at.

IP Publication 5 teaches about a manufacturing method to obtain a spherical silicon carbide grains of an average diameter of 50 - 100000 nm, wherein polycarbosilane as the raw material is granulated into a spherical grain in a poor solvent, and the grain is sintered at a temperature 500 - 1600 °C; in an example, it is described that by sintering the grain at 1300 °C silicon carbide grains of average diameters 50 nm and 4500 nm were obtained; however, this method has a disadvantage of having to use the expensive polycarbosilane as a raw material, and what is more the thus obtained silicon carbide grain is amorphous, which does not show a crystal phase peak in the X-ray diffraction analysis. Also, in the case wherein silicon carbide is made from silica and carbon, the reaction temperature must be generally way higher than 1600 °C, but in the manufacturing method of IP Publication 5, the sintering temperature, at the highest, is relatively low 1600 °C, so that although it is not written in IP Publication 5 it is presumed from the sintering temperature that the resulting grain has an incompletely condensed porous interior.

As is described above, although various methods are known to manufacture silicon carbide grain, the fact is that there has been obtained no spherical crystalline silicon carbide grain which has a condensed interior and has a grain diameter of 0.5 - 5 micrometers, which the present inventors sought.

### [Prior Art Documents]

### [IP Publications]

[IP Publication 1]
   Japanese Unexamined Patent Publication S60-255602 (1985)
[IP Publication 2]
   Japanese Unexamined Patent Publication 2009-226399
[IP Publication 3]
   Japanese Unexamined Patent Publication 2002-128565
[IP Publication 4]
   United States Patent No. 4551436
[IP Publication 5]
   Japanese Unexamined Patent Publication 2002-128565

### [Non-IP Publications]

[Non-IP Publication 1]
Materials Science and Technology 2009, vol.25, No.12, p1437

### [Summary of the Invention]

### [Problems the invention seek to solve]

Therefore, the object of the present invention is to provide a spherical crystalline silicon carbide grain powder, which has an average grain diameter of 0.5 - 5 micrometers and has a condensed interior.

In order to attain the above-mentioned object, the present inventors diligently investigated and, as a result, came to focus on an easy-to-make infinitesimal spherical synthetic resin grain, and found that even an amorphous carbon grain, while it is obtained by calcination, can maintain its infinitesimal grain diameter and its spherical shape, and that in the next reaction sintering step when this spherical carbon grain and silica powder are put to undergo reaction sintering under a certain temperature condition, it is possible to obtain a spherical crystalline silicon carbide grain having a condensed interior, and hence they possessed the invention.

### [Means to Solve the Problems]

In particular, the crystalline spherical silicon carbide powder grain of the present invention is characteristic in that its average grain diameter is 0.5 - 5 micrometers, the volume ratio of the interior pores having diameters from 0.003 micrometer through 0.1 micrometer is 0.01 cc/g or smaller, and its specific surface area is from 0.5 m²/g through 8.0 m²/g, and preferably it is of β type crystal.

Also, the spherical crystalline silicon carbide grain of the present invention is manufactured by first preparing the spherical synthetic resin powder and the silica powder in a ratio by weight (spherical synthetic resin powder)/(silica powder) of 1.10 -1.70, calcinating the spherical synthetic resin power in a non-oxidizing atmosphere at 800 - 1200 degrees C, and thereafter putting the spherical synthetic resin powder to undergo reaction sintering with the silica powder at 1600 - 2300 degrees C. If the spherical grains obtained after this sintering are to some extent in the form of adhesion agglomerate of the spherical grains, it is preferable that the adhesion agglomerate of the grains are disintegrated to make independent spherical grains.

### [Effects of the Invention]

According to the present invention, it is possible to obtain spherical crystalline silicon carbide powder having an average grain diameter of 0.5 - 5 micrometers and a condensed interior, so that by using this as the raw material, it becomes possible to easily manufacture a composite body and sintered body, which have a high density, a high hardness, a high thermal conduction, and a high temperature resistance. Also, by virtue of the present invention, it became possible to obtain a β type crystal silicon carbide grain having excellent dielectric characteristics and toughness, so that the invention has a high industrial applicability.

### [Brief Description of Drawings]

[Fig. 1] Fig. 1 is a photograph to show spherical silicon carbide grains having an average grain diameter of about 1.0 micrometer which were obtained in Example 1 of the present invention.
[Fig. 2] Fig. 2 is an X-ray diffraction chart showing that the spherical silicon carbide grain is a β type crystal.
[Fig. 3] Fig. 3 is a photograph showing the tissue of the silicon carbide grain in which plate crystals are seen to account for most part.
[Fig. 4] Fig. 4 is a photograph showing the tissue of the spherical silicon carbide grain having an average grain diameter of about 1.7 micrometer obtained in Example 3 of the present invention.

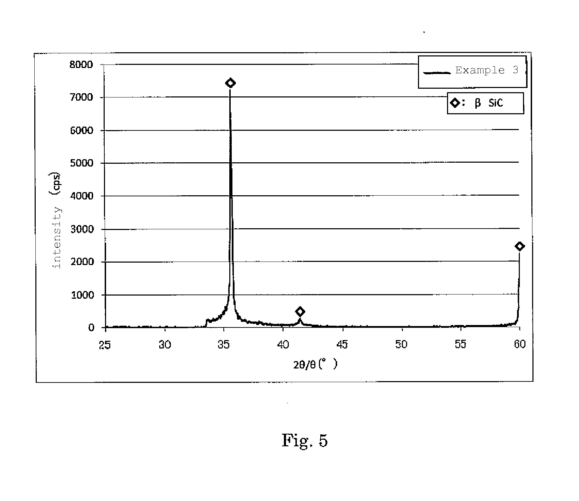

[Fig. 5] Fig. 5 is an X-ray diffraction chart showing that the spherical silicon carbide grain obtained in Example 3 of the present invention is a β type crystal.

### [Embodiments for carrying out the Invention]

Now, the embodiments of the silicon carbide grain and its manufacturing method of the present invention are explained in detail, but the present invention is not to be construed to be limited by such embodiments.

First, the manufacturing method for the silicon carbide grain of the present invention will be explained. The manufacturing method of the present invention comprises mainly the calcination step and the reaction sintering step and preferably the disintegration step, and these steps are conducted in this order, and will be explained in the same order.

### <Calcinating step>

The calcination step is conducted mainly for the purpose of carbonizing the spherical synthetic resin powder to thereby obtain amorphous porous spherical carbon grain. In this context, the spherical synthetic resin powder is the spherical grain powder having an average grain diameter of 0.5 - 5 micrometers and based on a thermosetting resin such as phenol resin, furan resin and melamine resin. The thermosetting resin to be selected is preferably one that has a mean molecular weight of 10,000 or higher, for if a spherical thermosetting resin having a mean molecular weight of 10,000 or higher is selected, the spherical carbon grain can maintain its shape while it is calcinated. If the mean molecular weight is lower than 10,000, a low molecular weight polymer having a low glass transition temperature is likely included, and when this element is subjected to the temperature condition of the calcinating step, thermal deformation takes place and the spherical grain shape cannot be maintained, which is unfavorable.

The combination ratio of thermosetting resin to silica powder is an important factor for it significantly affects the dimension of the product silicon carbide grain, and in the case wherein the thermosetting resin is a phenol resin, if the weight ratio of (phenol resin)/silica is 1.10 or greater, it is possible to produce a spherical silicon carbide grain through the reaction sintering. If the weight ratio is smaller than 1.10, unwanted tabular silicon carbide grains are also produced and the smaller the weight ratio is, the greater the amount of the tabular silicon carbide grains produced, which is unfavorable. If the thermosetting resin is a furan resin, it is preferable that the weight ratio of the furan resin to silica is 1.20 or higher.

As stated above, by setting the weight ratio of thermosetting resin to silica to be 1.1 or higher, it is possible to maintain the shape of the starting spherical synthetic resin grain throughout the reaction sintering step, but if the weight ratio is set to exceed 1.70, some carbon remains as unwanted un-reacted carbon, so that in the present invention it is preferable that the weight ratio of thermosetting resin to silica is set to be 1.1 through 1.7.

As the main purpose of this calcinating step is to obtain a porous and amorphous spherical carbon grain through carbonization of the spherical thermosetting resin, so that if the atmosphere is oxidizing, the thermosetting resin is oxidized and burnt out and thereby the carbon to be used as the raw material to participate in the reaction with silica in the next sintering step is lost; hence it is a must that the atmosphere is a non-oxidizing one such as argon and nitrogen gas.

It is preferable that the calcinating step is conducted with the calcination temperature maintained between 800 -1200 degrees C for a duration of 0.5 -2 hours. When the calcinations temperature is lower than 800 degrees C, the carbonization reaction becomes incomplete, with a result that lower hydrocarbons such as hydrogen, water, carbon monoxide, carbon dioxide and methane, which ought to have been by-produced and vaporized away in the calcinating step, quickly start to be by-produced during the intermediate temperature raising operation preceding the next reaction sintering step. The generation and expansion of these gases pushes the pressure up and causes the porous spherical carbon grain to be collapsed, which is unfavorable. Also, a similar unwanted collapse of the grain occurs when the calcinations temperature exceeds 1200 degrees C.

As for the silica powder, which is the other raw material to produce the silicon carbide grain, it may be replenished after the calcinating step, but to do so the reaction system must be cooled once so that the replenished silica powder is preferably mixed with the spherical thermosetting resin powder before the next calcination. If the grain size of the silica power is over large, the velocity of the reaction to produce the silicon carbide powder in the next reaction sintering step becomes inconveniently low, and part of the silica powder tends to remain as silica, so that the grain size of the silica powder is preferably smaller than the grain size of the thermosetting resin. The so-called Silica Aerosil, which is obtained as a silane compound is burnt in a flame, is an amorphous grain, and its grain diameter, which is not definitely defined, is so small as about 0.02 micrometer, and this is the best choice for the silica powder.

This kind of calcinating step does not have to be conducted in an installation separate from where the next reaction sintering step is conducted, so that the calcinating operation and the reaction sintering operation may be consecutively conducted in the same installation.

### <Reaction sintering step>

The reaction sintering step is conducted for the purpose of obtaining a spherical crystalline silicon carbide grain with a condensed interior, by reacting silica powder with the porous and amorphous spherical carbon grain which has been obtained at the calcinating step. It is preferable that the reaction sintering is conducted at the sintering temperature of 1600-2300 degrees C for the retention time of 0.5 - 3.0 hours. The silicon monoxide gas which is generated as the silica powder is decomposed reacts with carbon to produce silicon carbide. On this occasion, the silicon monoxide gas does not stop at the external surface of the carbon grain but permeates to the porous interior to thereby react with the carbon there to produce silicon carbide so as to condense the grain.

If the sintering temperature is lower than 1600 degrees C and the retention time is shorter than 0.5 hour, the densification of the interior of the grain becomes incomplete, which is unfavorable. Also, if the sintering temperature exceeds 2300 degrees C, and the retention time exceeds 3.0 hours, the balance of economy turns unfavorable. It is possible to determine whether the interior of a grain is condensed or not by referring to a combination of the pore volume measurement obtained by mercury press-in method and the specific surface area measurement obtained by BET method. For example, the mean size of the pores in the interior of a grain of a mean size of 0.5 - 5 micrometers is 0.1 micrometer or smaller, and by measuring the total volume of the pores it is possible to determine the degrees of the condensation.

In particular, this determination procedure goes as follows: the amorphous porous spherical carbon grain obtained after the calcination has pores of a mean size of 0.003 through 0.1 micrometer in the interior to a degree of 0.01 cc/g or smaller, which is a volume-to-weight ratio of the interior pores or specific volume thereof, and the specific surface area is 0.5 through 8.0 m²/g, and these values decrease as the sintering reaction between the porous spherical carbon grain and the silica powder progresses to enhance the condensation in the reaction sintering step, so that the interior of a silicon carbide grain may be determined condensed if the volume-to-weight ratio of the interior pores of a mean size of 0.003 through 0.1 micrometer is 0.01 cc/g or smaller and the specific surface area is 8.0 m²/g or smaller, or preferably if the volume-to-weight ratio is 0.000007 cc/g through 0.01 cc/g and the specific surface area is 8.0 m²/g or smaller, or more preferably, if the volume-to-weight ratio is 0.000007 cc/g through 0.01 cc/g and the specific surface area is 0.5 m²/g through 4.0 m²/g.

If the densification of a grain is incomplete, and if the grain is used as a raw material to make a structural skeleton or a composite molded body, the raw material thermal conductivity tends to become low, and thus unfavorable. Therefore, in order to make sure a complete condensation of a grain is accomplished, it is possible to increase the temperature and retention time of the reaction sintering step, but this tends to give rise to strong fusion between grains and grain coarsening so that it becomes impossible to maintain the spherical configuration of the gain. When the spherical grains are dispersed and separated, it becomes easier to accomplish high density filling as well as to impart high thermal conductivity to the structural skeleton or the composite molded body, the fusion between the grains and deformation of the grains from spherical configuration ought to be avoided as much as possible.

According to the present invention, as described above, it is only possible to obtain a spherical crystalline silicon carbide grain of a mean diameter of 0.5 - 5 micrometers with condensed interior by virtue of conducting the calcinating step and the reaction sintering step. Also, a characteristic of the present invention is that the resulting grain is a β type crystal grain. It is generally said that the crystal structure of silicon carbide is predominantly of β type when crystallized at temperatures up to 1800 degrees C, and that when crystallized at higher temperatures it becomes predominantly of α type; however, in the case of the grain of the present invention, even when it is sintered at a temperature up to 2300 degrees C, the grain is maintained exclusively in the state of β type crystal with scarce α type crystal included. The β type crystalline silicon carbide possesses more excellent dielectric characteristics and toughness than the α type crystalline silicon carbide does, so that the grain of the present invention has a very high industrial usefulness.

### <Disintegration step>

The final disintegration step is conducted for the purpose of disintegrating the grain agglomerates, which are formed as some of the spherical silicon carbide grains obtained in the reaction sintering step, fuse together weakly, so as to break them apart into discrete grains. In this disintegration step, it is possible to obtain discrete spherical grains from the agglomerates by subjecting the grains to a treatment by a disintegration means such as an air jet-type sifter, a vibrating sieve, a supersonic wave sieve, and a stirrer cracking machine. If the grains are subjected to a treatment by a strong disintegration means such as a mortar, a ball mill, an impact cracking machine, and a jet mill, even the discrete silicon carbide grains are also destroyed so that the sphereness of the grains can not be maintained; hence use of such strong disintegration means should not be avoided.

### [Examples]

Now, examples of the present invention will be explained in detail.

### <Example 1>

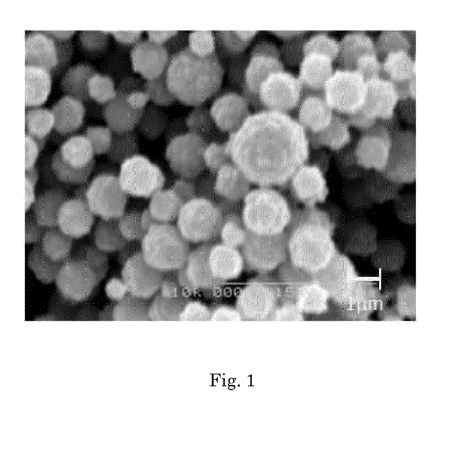

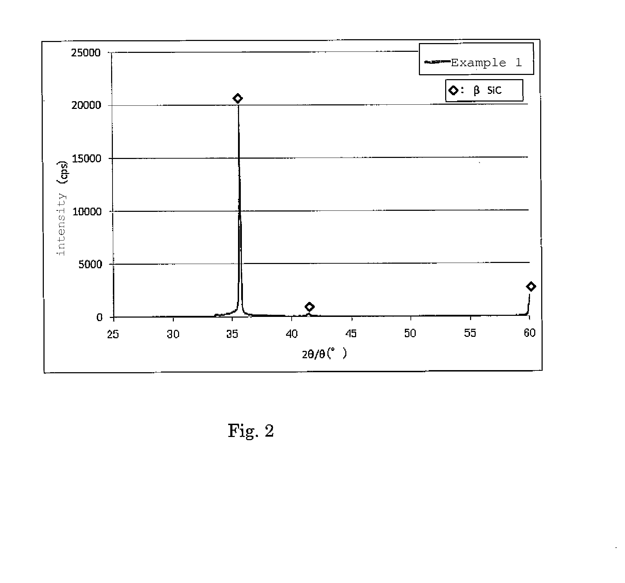

In Example 1, a powder was prepared by mixing a spherical phenol resin having a mean grain size of 1.5 micrometer with Silica Aerosil powder having a mean grain size of 0.02 micrometer such that the (phenol resin)/silica weight ratio becomes 1.30, and this powder mixture was put in a high frequency induction furnace and was heated to 1000 degrees C in an argon atmosphere, and by maintaining this temperature of 1000 degrees C for one hour, the spherical resin was calcinated. Thereafter, the substance was heated to 2200 degrees C and this temperature of 2200 degrees C was maintained for two hours, whereby a synthetic SiC powder was obtained. This synthetic SiC powder was retained in a resistance heating furnace for three hours at 700 degrees C to thereby remove unreacted carbon; as a result a spherical grain having a mean grain size of about 1.0 micrometer, shown in Fig. 1, was obtained. The thus obtained spherical grain was found to be of β type crystal SiC from the X-ray diffraction chart shown in Fig. 2. Also, this spherical SiC had interior pores of a mean pore size of 0.05 micrometer and a specific interior pore volume of 0.00002 cc/g, and a specific surface area of 2.9 m²/g.

### <Example 2>

In Example 2, the same treatment was conducted as in Example 1 except that the (phenol resin)/silica weight ratio was rendered 1.13 and the reaction temperature after the calcination was made 1800 degrees C. As the result, a spherical SiC grain having a mean grain size of about 1 micrometer was obtained. The thus obtained spherical SiC grain was found to be of β type crystal SiC from the X-ray diffraction chart, and its specific surface area was 2.7 m²/g.

### <Comparative Example 1>

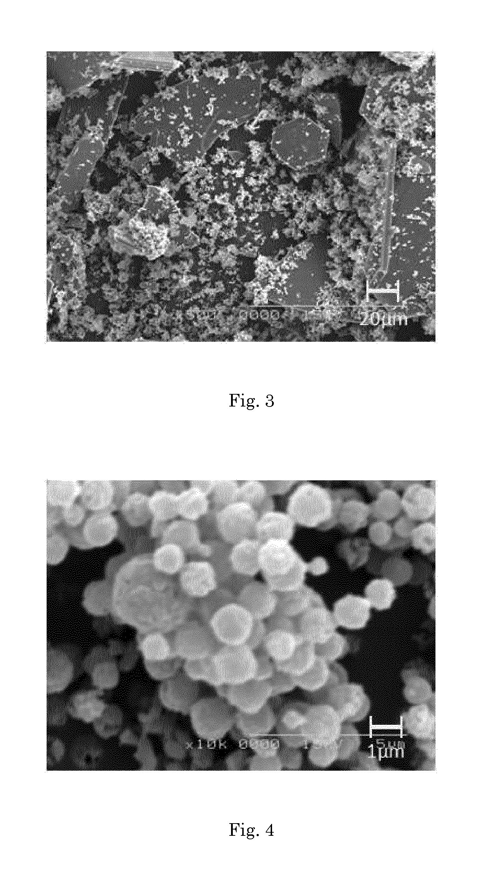

In Comparative Example 1, the same treatment was conducted as in Example 1 except that the (phenol resin)/silica weight ratio was rendered 1.00. As the result, a powder shown in Fig. 3 was obtained. The thus obtain powder was mostly tabular crystal grains and did not retain sphereness in shape.

### <Example 3>

In Example 3, a powder was prepared by mixing a spherical furan resin having a mean grain size of 2.5 micrometers with Silica Aerosil powder having a mean grain size of 0.02 micrometer such that the (furan resin)/silica weight ratio becomes 1.60, and this powder mixture was put in a high frequency induction furnace and was heated to 1000 degrees C in an argon atmosphere, and by maintaining this temperature of 1000 degrees C for one hour, the spherical resin was calcinated. Thereafter, the substance was heated to 2000 degrees C and this temperature of 2000 degrees C was maintained for two hours, whereby a synthetic SiC powder was obtained. This synthetic SiC powder was retained in a resistance heating furnace for three hours at 700 degrees C to thereby remove unreacted carbon; as a result a spherical grain having a mean grain size of about 1.7 micrometer, shown in Fig. 4, was obtained. The thus obtained spherical grain was found to be of β type crystal SiC from the X-ray diffraction chart shown in Fig. 2. Also, this spherical SiC had interior pores of a mean pore size of 0.05 micrometer and a specific interior pore volume of 0.0003 cc/g, and a specific surface area of 2.1 m²/g.

### <Example 4>

In Example 4, the same treatment was conducted as in Example 3 except that the (furan resin)/silica weight ratio was rendered 1.20 and the reaction temperature after the calcination was made 1600 degrees C. As the result, a spherical SiC grain having a mean grain size of about 1 micrometer was obtained. The thus obtained spherical SiC grain was found to be of β type crystal SiC from the X-ray diffraction chart, and its specific surface area was 2.2 m²/g.

A spherical crystalline silicon carbide powder as well as its manufacturing methods are proposed; the new power's mean grain size is 0.5 - 5 micrometers, its specific volume of interior pores having a mean diameter of 0.003 through 0.1 micrometer is 0.000007 cc/g through 0.01 cc/g, and its specific surface area is 0.5 m²/g through 8.0 m²/g.

## Claims

1. A spherical crystalline silicon carbide powder **characterized in that** its mean grain size is 0.5 - 5 micrometers, that its specific volume of interior pores having a mean diameter of 0.003 through 0.1 micrometer is 0.000007 cc/g through 0.01 cc/g, and that its specific surface area is 0.5 m²/g through 8.0 m²/g.

2. A spherical crystalline silicon carbide powder as claimed in Claim 1
wherein its crystalline structure is of β type.

3. A method for manufacturing a spherical crystalline silicon carbide powder: of which a mean grain size is 0.5 - 5 micrometers; a specific volume of interior pores having a mean diameter of 0.003 through 0.1 micrometer is 0.000007 cc/g through 0.01 cc/g; and a specific surface area is 0.5 m²/g through 8.0 m²/g;
said method comprising steps of: preparing a spherical synthetic resin powder and a silica powder in a ratio by weight of 1.10 -1.70, calcinating the spherical synthetic resin power in a non-oxidizing atmosphere at 800 - 1200 degrees C, and putting the spherical synthetic resin powder to undergo reaction sintering with the silica powder at 1600 - 2300 degrees C.

4. A method for manufacturing a β type spherical crystalline silicon carbide powder: of which a mean grain size is 0.5 - 5 micrometers; a specific volume of interior pores having a mean diameter of 0.003 through 0.1 micrometer is 0.000007 cc/g through 0.01 cc/g; and a specific surface area is 0.5 m²/g through 8.0 m²/g;
said method comprising steps of: preparing a spherical synthetic resin powder and a silica powder in a ratio by weight of 1.10 -1.70, calcinating the spherical synthetic resin power in a non-oxidizing atmosphere at 800 - 1200 degrees C, and putting the spherical synthetic resin powder to undergo reaction sintering with the silica powder at 1600 - 2300 degrees C.

5. A method for manufacturing a spherical crystalline silicon carbide powder as claimed in Claim 3, wherein product of said reaction sintering is disintegrated into discrete grains.

6. A method for manufacturing a β type spherical crystalline silicon carbide powder as claimed in Claim 4, wherein product of said reaction sintering is disintegrated into discrete grains.
